# EUROPÄISCHE PATENTSCHRIFT

(11) **EP 2 594 126 B1**
(45) Veröffentlichungstag und Bekanntmachung des Hinweises auf die Patenterteilung: **26.07.2017**
(21) Anmeldenummer: 12185364.2
(22) Anmeldetag: 21.09.2012
(51) Int. Cl.: A01F 12/26, A01F 12/18

(54) **Abscheidekorb**
Separation grate
Panier de séparation

(30) Priorität: 18.11.2011 DE 102011055493
(43) Veröffentlichungstag der Anmeldung: 22.05.2013
(73) Patentinhaber: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE)

(56) Entgegenhaltungen:
- EP-A2- 0 281 383
- EP-A2- 2 327 290
- US-A- 2 457 259
- US-A- 3 537 459

## Beschreibung

Die vorliegende Erfindung betrifft einen Abscheidekorb einer Erntegutabscheidevorrichtung eines Mähdreschers gemäß dem Oberbegriff des Anspruches 1.

Aus der EP 0 281 383 A2 ist ein Abscheidekorb eines nach dem Axialflussprinzip arbeitenden Erntegutabscheidevorrichtung eines Mähdreschers bekannt, der die Erntegutabscheidevorrichtung abschnittsweise umgibt. Der Abscheidekorb besteht aus zueinander beabstandeten, bogenförmigen Rahmenteilen, zwischen denen sich quer zu den bogenförmigen Rahmenteilen erstreckende Stege ortsfest angeordnet sind. Durch die Durchtrittsöffnungen tritt von der Erntegutabscheidevorrichtung aus einem zu bearbeitenden Erntegutstrom ausgeschiedenes Korn hindurch, welches von einem Rücklaufboden aufgefangen wird. Die Durchtrittsöffnungen werden durch an den Stegen fest angeordnete fingerförmige Elemente, die vor dem Ende der jeweiligen Durchtrittsöffnungen enden, begrenzt. Die fingerförmigen Elemente sind als Leisten ausgeführt, die zwischen den Rahmenteilen an den Stegen angebracht werden, um die Abscheidefläche auszubilden.

Als nachteilig an einem Abscheidekorb gemäß der EP 0 281 383 A2 zeigt sich, dass die Anpassung des Abscheidekorbes an unterschiedliche Fruchtarten relativ aufwändig ist. Die Fingerleisten müssen entsprechend der Fruchtart variiert werden, indem Fingerleisten mit unterschiedlicher Fingeranzahl eingebracht werden, um die der jeweiligen Fruchtart entsprechende Öffnungsweite der Durchtrittsöffnungen bereitzustellen.

Somit ist es Aufgabe der vorliegenden Erfindung, einen Abscheidekorb der eingangs genannten Art derart weiterzubilden, dass auf einfache und kostengünstige Weise eine Variation der Abscheideleistung in Abhängigkeit von der Fruchtart und den Erntekonditionen möglich wird.

Erfindungsgemäß wird diese Aufgabe durch die kennzeichnenden Merkmale des Anspruches 1 gelöst.

Vorteilhafte Weiterbildungen der Erfindung sind Gegenstand der Unteransprüche. Gemäß Anspruch 1 wird vorgeschlagen, dass in die Durchtrittsöffnungen zwischen den Stegen sich einheitlich in Umfangsrichtung erstreckende Elemente einbringbar sind, die in axialer Richtung des Abscheidekorbes mit einem mittleren Achsabstand zueinander beabstandet angeordnet sind, und dass jedes der Elemente über seine Längsausdehnung gesehen eine mittlere Breite aufweist, wobei das Verhältnis der mittleren Breite eines Elementes zu dem mittleren Achsabstand eines benachbarten Elementes mindestens 1:3,5 beträgt. Eine Variation der in die Durchtrittsöffnungen einbringbaren Elemente bezüglich ihrer mittleren Breite in Bezug auf ihren mittleren Achsabstand zueinander führt zu einer Zunahme der für den Durchtritt des Erntegutes verfügbaren Fläche in axialer Richtung des Abscheidekorbes. Die Ausprägung der in die Durchtrittsöffnungen einbringbaren Elemente führt zu einer Erhöhung des Gütegrades der Abscheidekörbe, wenn das Verhältnis von Stroh zu abzuscheidendem Erntegut Fruchtartbedingt zunimmt. Ebenso wirkt sich diese Ausprägung bei der Verarbeitung feuchten Strohs auf den Gütegrad der Abscheidekörbe positiv aus. Hierzu ist vorgesehen, dass die fingerförmigen Elemente lösbar am Abscheidekorb anbringbar sind. Somit lässt sich in einfacher Weise der Abscheidekorb umrüsten, um diesen an eine sich ändernde Fruchtart und/oder sich ändernde Erntebedingungen anzupassen.

Es sind mehrere fingerförmige Elemente an einem Rahmenelement angeordnet. Dadurch wird die Montage und Demontage der fingerförmigen Elemente vereinfacht. Das Rahmenelement weist einen ersten Schenkel sowie einen gegenüber diesem um einen Winkel geneigten zweiten Schenkel auf. Das Rahmenelement ist mit seinem ersten Schenkel lösbar an den Stegen befestigbar, während sich der zweite Schenkel in Umfangsrichtung des Abscheidekorbes innerhalb der Durchtrittsöffnung abschnittsweise erstreckt und diese teilweise verschließt.

An den Rahmenelementen ist auf der dem jeweiligen Element abgewandten Seite jeweils zumindest eine Leiste angeordnet, die den ersten Schenkel des Elementes in radialer, dem rotierenden Arbeitsorgan zugewandter Richtung überragt. Die Leiste ragt erfindungsgemäss in den in der Erntegutabscheidevorrichtung umlaufenden Gutstrom hinein. Hierdurch wird ein aggressiveres Einwirken auf das zu bearbeitende Erntegut erreicht. Weiterhin kann an der zumindest einen Leiste auf der den fingerförmigen Elementen abgewandten Seite ein zusätzliches Verschleißblech angeordnet sein. Das Verschleißblech stellt einen wirksamen Schutz der Leiste sowie des fingerförmigen Elementes vor der abrasiven Wirkung des Erntegutes dar. Es ist lösbar an der Leiste oder dem Steg befestigbar und somit jederzeit austauschbar.

Insbesondere kann der mit dem Erntegut in Berührung kommende Bereich der zumindest einen Leiste mit verschiedenen Profilierungen ausführbar sein. Die Profilierung der Leiste wird in Abhängigkeit von dem zu verarbeitenden Erntegut ausgewählt.

In bevorzugter Weiterbildung kann das jeweilige Rahmenelement um die Schwenkachse drehbar gelagert sein.

Hierzu kann die Schwenkachse in einem Bereich der Rahmenelemente angeordnet sein, in dem eine Wandung des Rahmenelementes und die fingerförmigen Elemente aufeinander stoßen. Das Rahmenelement lässt sich verschwenken, um die Durchtrittsöffnung wahlweise vollständig freizugeben oder abschnittsweise zu verschließen. Dies kann in Abhängigkeit von der Erntegutart erfolgen. So wird bei der Abscheidung von beispielsweise Getreide die Durchtrittsöffnung kleiner gewählt als bei der Abscheidung von Reis oder Mais als Erntegut.

Vorteilhafterweise kann der Abscheidekorb sich quer zu den Stegen erstreckende Drähte aufweisen, die gemeinsam eine gitterartige Struktur mit Durchtrittsöffnungen ausbilden, zwischen denen die fingerförmigen Elemente einbringbar sind. Dieser Aufbau weist zu den Korbwangen parallel angeordnete Drähte auf, die gemeinsam mit den Stegen eine Gitterstruktur ausbilden, der eine Art Basisabscheidekorb für die nach dem Axialflussprinzip arbeitende Erntegutabscheidevorrichtung bildet. Die

fingerförmigen Elemente sind jederzeit nachrüstbar, so dass mit einer Basisvariante des Abscheidekorbes bereits verschiedene Erntegutarten wirtschaftlich und effizient verarbeitbar
sind und durch die Nachrüstung auf die Verarbeitung anderer Erntegutarten ausgeweitet werden können. In gleicher Weise lassen sich auch die Leisten und/oder Verschleißbleche an dem Abscheidekorb befestigen.

Insbesondere können die mit fingerförmigen Elementen versehenen Rahmenelemente um die Schwenkachse aus einer ersten Position, in der die Durchtrittsöffnungen nahezu vollständig geöffnet sind, in eine zweite Position überführbar sein, in der die fingerförmigen Elemente im Wesentlichen parallel zu den sich in radialer Richtung des Abscheidekorbes erstreckenden Abschnitten der Streben ausgerichtet sind, die die jeweilige Durchtrittsöffnung begrenzen. Diese Variante ermöglicht den kombinierten Einsatz des Abscheidekorbes für das Ernten von beispielsweise Reis oder Mais bei einem Betrieb der Rahmenelemente in der ersten Position und für das Ernten von Getreide bei einem Betrieb der Rahmenelemente in der zweiten Position.

Die vorliegende Erfindung wird nachstehend anhand eines in den Zeichnungen dargestellten Ausführungsbeispieles näher erläutert.
Es zeigen:
- Fig. 1: eine schematische Ansicht eines Mähdreschers;
- Fig. 2a: eine perspektivische Ansicht eines Abscheidekorbes für eine nach dem Axialflussprinzip arbeitende Erntegutabscheidevorrichtung;
- Fig. 2b: eine perspektivische Ansicht eines Abscheidekorbes für eine nach dem Axialflussprinzip arbeitende Erntegutabscheidevorrichtung mit eingesetzten fingerförmigen Elementen;
- Fig. 3: eine Detailansicht einer ersten Ausführungsform fingerförmiger Elemente, welche in einen Abscheidekorb nach Fig. 2b einsetzbar sind;
- Fig. 4: eine Detailansicht einer zweiten Ausführungsform fingerförmiger Elemente, welche in einen Abscheidekorb nach Fig. 2b einsetzbar sind;
- Fig. 5a, b: Detailansichten einer dritten Ausführungsform fingerförmiger Elemente, welche in einen Abscheidekorb nach Fig. 2b einsetzbar sind;
- Fig. 6: eine Ansicht auf die Abscheidefläche des Abscheidekorbes gemäß Fig. 2b;
- Fig. 7a, 7b: eine alternative Ausführungsform eines Abscheidekorbes ohne sich in radialer Richtung erstreckender Streben;
- Fig. 8a, 8b: eine alternative Ausführungsform des Abscheidekorbes gemäß Fig. 2b.

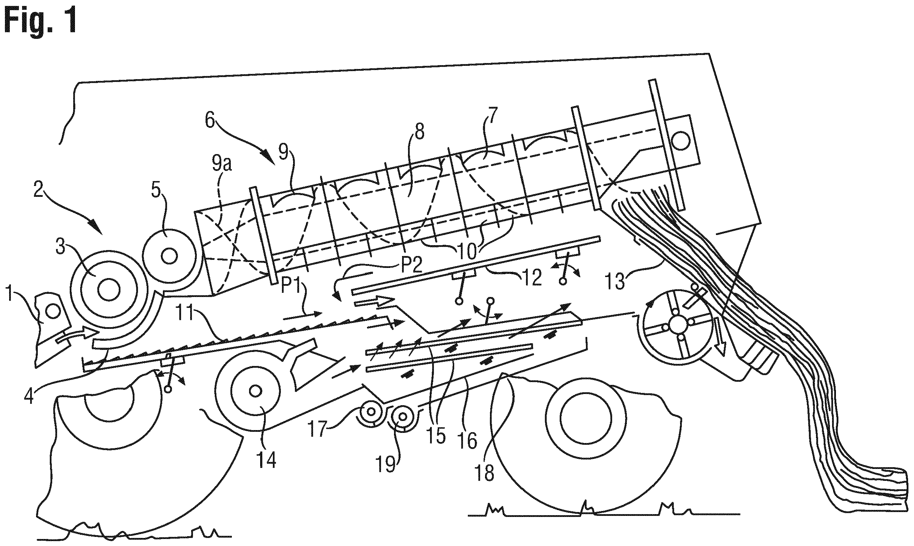

Fig. 1 zeigt einen schematischen Schnitt durch den hinteren Bereich eines Mähdreschers als Beispiel für eine erfindungsgemäße Trennvorrichtung. Bei einem solchen Mähdrescher ist ein zu trennender Erntegutstrom durch gemähtes Getreide gebildet, und Ziel der Trennung ist, einen Nutzmaterialstrom, der in möglichst reiner Form die Körner des Getreides enthält, und einen Abfallmaterialstrom aus den Nichtkornbestandteilen zu gewinnen. Im nicht dargestellten vorderen Bereich des Mähdreschers wird das Erntegut von einem Vorsatzgerät aufgenommen und von einer nur ausschnittweise dargestellten Einzugs- und Fördereinrichtung 1 einer nach dem Tangentialflussprinzip arbeitenden Erntegutabscheidungsvorrichtung, einer Drescheinrichtung 2 zugeführt. Die Drescheinrichtung 2 ist im Wesentlichen aufgebaut aus einer rotierenden Dreschtrommel 3 mit quer zur Fahrrichtung des Mähdreschers orientierter Achse, die auf einem Teil ihres Umfangs von einem als Dreschkorb 4 ausgeführten Abscheidekorb umgeben ist. Ein Teil der in der Drescheinrichtung 2 von den Halmen getrennten Körner fällt durch in ihrer Öffnungsweite veränderbaren Durchtrittsöffnungen des Dreschkorbes 4 auf einen Förderboden 11, auf dem diese, wie durch einen Pfeil P1 angedeutet, entgegen der Fahrtrichtung des Mähdreschers durch Rüttelbewegungen gefördert werden. Der Hauptstrom des Erntegutes wird jedoch zwischen Dreschtrommel 3 und Dreschkorb 4 hindurchgeführt und mit Unterstützung durch eine Leittrommel 5 einer nach dem Axialflussprinzip arbeitenden Abscheideeinrichtung 6 für das aufgenommene Erntegut zugeführt.

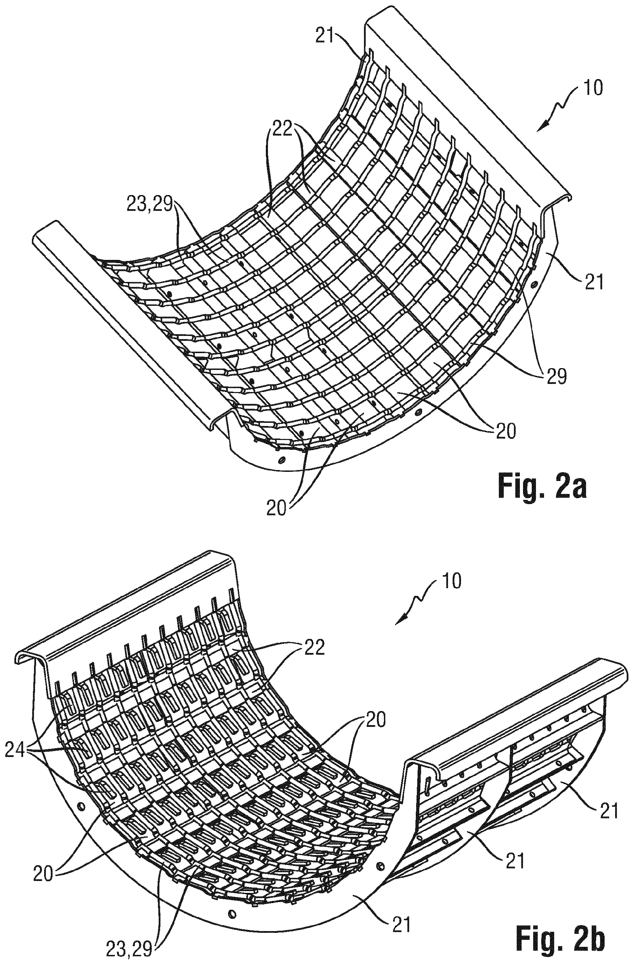

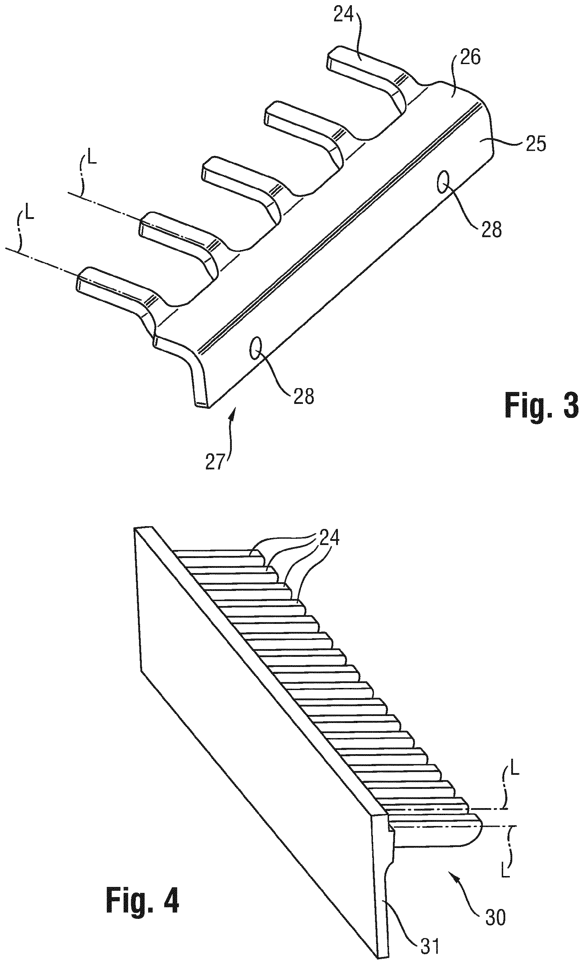

Die Abscheideeinrichtung 6 ist in Fig. 1 rein schematisch dargestellt als ein zylindrisches, an seinen Enden offenes Gehäuse 7, in dem über seine gesamte Länge ein Förderorgan 8 drehantreibbar gelagert ist. Durch die Drehung des Förderorgans 8 wird das Erntegut auf einer schraubenlinienförmigen Bahn durch die Abscheideeinrichtung 6 gefördert. Von einer Oberseite des Gehäuses 7 ins Innere vorstehende Rippen 9 fördern in Zusammenwirkung mit dem äußeren Rand der Wendel 9a des Förderorgans 8 die Entmischung des Erntegutes. Der untere Bereich des Gehäuses 7 ist durch Abscheidekörbe 10 gebildet, die Durchtrittsöffnungen mit veränderbaren Abmessungen aufweisen. Der Aufbau dieser Abscheidekörbe 10 wird an späterer Stelle mit Bezug auf die Fig. 2 und 3 näher erläutert.

Körner, Spreu und Feinstroh, die durch die Öffnungen der Abscheidekörbe 10 aus der Abscheideeinrichtung 6 herausgeschleudert werden, fallen bereichsweise auf den Förderboden 11 beziehungsweise einen so genannten Rücklaufboden 12. Der Rücklaufboden 12 ist rüttelnd bewegt, so dass auf ihm gesammeltes Material in Fahrtrichtung des Mähdreschers in Richtung des Pfeils P2 befördert wird und schließlich auf dem Förderboden 11 mit dem bereits in der Drescheinrichtung 2 abgeschiedenen Korn zusammentrifft, um einen Materialstrom zu bilden, der hier als vorgereinigter Strom bezeichnet wird.

Das während des Durchgangs durch die Abscheideeinrichtung 6 weitestgehend vom Korn befreite Grobstroh wird am rückseitigen Ende der Abscheideeinrichtung 6 ausgeworfen und fällt über eine Rutsche 13 zurück auf den Boden oder wird über eine Auswurftrommel ausgebracht.

Die Drescheinrichtung 2 und die Abscheideeinrichtung 6 bilden so eine Trenn- oder Abscheideprozessstufe, die einerseits den vorgereinigten Strom und andererseits einen aus dem ausgedroschenen Stroh bestehenden ersten Abfallmaterialstrom liefert. Eine weitere Trenn- oder Reinigungsprozessstufe ist im Wesentlichen aufgebaut aus einem Gebläse 14 und einer im Windstrom des Gebläses 14 liegenden Gruppe von Siebböden 15, die in einem nicht dargestellten Rahmengestell zu einer Schwingbewegung angetrieben sind und mit dem vorgereinigten Strom beschickt werden. Das im vorgereinigten Strom enthaltene Korn rieselt durch die schwingenden Siebböden 15 hindurch auf einen abschüssigen ersten Leitboden 16. Am unteren Ende des ersten Leitbodens 16 ist eine Förderschnecke 17 angeordnet, die das Korn zu einem Elevator (nicht dargestellt) und über diesen in einen Korntank (nicht dargestellt) fördert.

Leichte Bestandteile des vorgereinigten Stroms werden während des Siebens vom Wind des Gebläses 14 mitgenommen und als ein zweiter Abfallstrom auf den Boden ausgeschieden. Grobe Bestandteile, insbesondere um ausgedroschene Fruchtstände des vorgereinigten Stroms, die die Siebböden 15 überquert haben, ohne durchgesiebt oder vom Gebläsewind mitgenommen zu werden, fallen schließlich auf einen zweiten abschüssigen Leitboden 18 und werden von einer an dessen unteren Ende angeordneten Förderschnecke 19 zurück zu der Drescheinrichtung 2 oder zu der Abscheideeinrichtung 6 gefördert, um diese erneut zu durchlaufen.
In Fig. 2a ist ein Abscheidekorb 10 der Abscheideeinrichtung 6 in perspektivischer Ansicht dargestellt. Der Abscheidekorb 10 umfasst mehrere bogenförmige Rahmenbauteile 21, so genannte Korbwangen, die parallel und in axialer Richtung zueinander beabstandet angeordnet sind. Quer zu den Rahmenbauteilen 21 sind Stege 22 zueinander beabstandet angeordnet. Zwischen den Rahmenbauteilen 21 erstrecken sich in radialer Richtung Streben 23, die gemeinsam mit den Stegen 22 eine gitterförmige Struktur ausbilden. Die gitterförmige Struktur weist eine Vielzahl von Durchtrittsöffnungen 20 auf, die mit den Stegen 22 und den Streben 23 eine Abscheidefläche des Abscheidekorbes 10 bilden, durch die von der Abscheideeinrichtung 6 separiertes Erntegut hindurchtreten kann. Die Streben 23 sind vorzugsweise als Drähte 29 ausgeführt.

Die Darstellung gemäß Fig. 2b zeigt den Abscheidekorb 10 mit darin eingesetzten fingerförmigen Elementen 24. In die Durchtrittsöffnungen 20 sind sich einheitlich in Umfangsrichtung des Abscheidekorbes 10 erstreckende fingerförmige Elemente 24 einbringbar, mit denen die Öffnungsweite der Durchtrittsöffnungen 20 veränderbar ist. Hierzu sind die fingerförmigen Elemente 24 im dargestellten Ausführungsbeispiel lösbar an den Stegen 22 befestigbar, beispielsweise durch eine Schraubverbindung oder dergleichen. Die fingerförmigen Elemente 24 erstrecken sich in Umfangsrichtung des Abscheidekorbes 10, berühren jedoch den nächsten, die jeweilige Durchtrittsöffnung 20 begrenzenden Stege 22 nicht, das heißt, dass die fingerförmigen Elemente 24 ein freies Ende aufweisen. Ein derartiger Abscheidekorb 10 ist auch als Dreschkorb 4 einsetzbar.

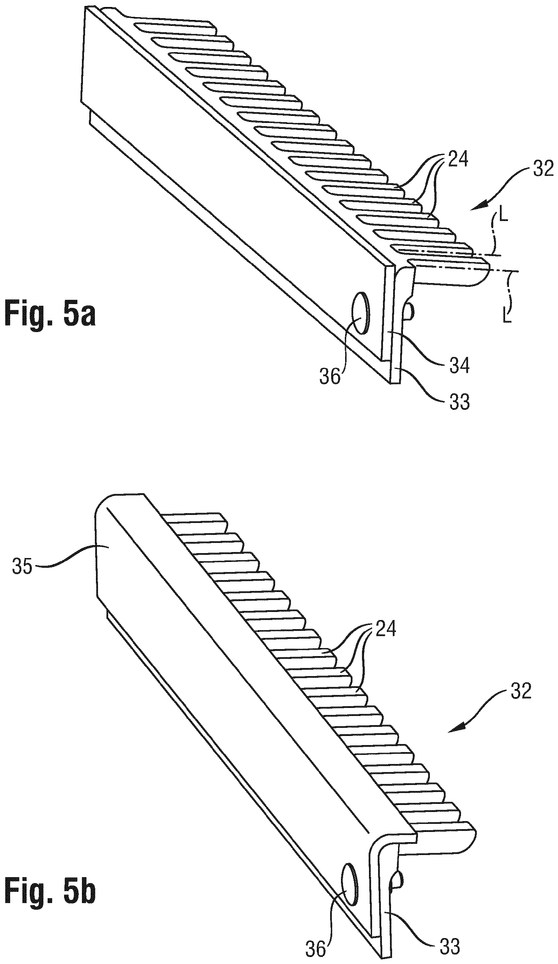

In Fig. 3 ist eine Detailansicht einer ersten Ausführungsform der fingerförmigen Elemente 24 dargestellt. Die fingerförmigen Elemente 24 sind Bestandteil eines eiteilig ausgeführten Rahmenelementes 27. Das Rahmenelement 27 besteht aus einem Winkelprofil mit einem ersten Schenkel 25 sowie einem unter einem Winkel zu dem ersten Schenkel 25 angeordneten zweiten Schenkel 26, an welchem die fingerförmigen Elemente 24 angeformt sind. Der erste Schenkel 25 ist mit Durchbohrungen 28 versehen, die der Befestigung des Rahmenelementes 27 durch eine Schraubverbindung an den Stegen 22 des Abscheidekorbes 10 dienen. Die fingerförmigen Elemente 24 sind gegenüber dem zweiten Schenkel 26 erhaben angeordnet, so dass diese beim Einsetzen in die Durchtrittsöffnungen 20 von der konvexen Seite des Abscheidekorbes 10 her sich im Wesentlichen auf einer Höhe mit den Streben 23 befinden. Weiterhin kann auf der dem ersten Schenkel 25 abgewandten Seite des Rahmenelementes 27 eine Leiste 34 befestigt werden, die den ersten Schenkel 25 in radialer Richtung derart überragt, dass die Leiste 34 abschnittsweise in das in der Abscheideeinrichtung 6 umlaufende Erntegut hineinragt, wodurch ein aggressiveres Abscheideverhalten erreichbar ist. Eine solche Leiste 34 ist in Fig. 5a dargestellt. Diese Leiste kann zudem als austauschbares Verschleißelement verwendet werden, um den Verschleiß der Stege 22 zu reduzieren, an dem die Rahmenelementes 27 befestigt werden, zu reduzieren.

Fig. 4 zeigt eine alternative Ausführungsform eines die fingerförmigen Elemente 24 tragenden Rahmenelementes 30. Das einteilige Rahmenelement 30 wird von einer plattenförmigen Wandung 31 sowie unter einem Winkel zu dieser angeordneten fingerförmigen Elementen 24 gebildet. Die Wandung 31 überragt in eingebautem Zustand die fingerförmigen Elemente 24 auf ihrer der Dreschtrommel 3 oder dem Förderorgan 8 zugewandten Seite abschnittsweise, wodurch eine Kante realisiert wird, die auf das der Abscheideeinrichtung zugeführte Erntegut einwirkt.

Die Darstellung in den Fig. 5a und 5b zeigt weitere Ausgestaltungen eines die fingerförmigen Elemente 24 tragenden Rahmenelementes 32. Die Ausführungsform der Fig. 5a ist nicht erfindungsgemäß. Das Rahmenelement 32 ist ebenfalls einteilig ausgeführt, weist aber keinen zweiten die fingerförmigen Elemente 24 überragenden Abschnitt auf. Wie zuvor beschrieben, wird auch das einteilige Rahmenelement 32 von einer plattenförmigen Wandung 33 sowie unter einem Winkel zu dieser angeordneten fingerförmigen Elementen 24 gebildet. Auf der den fingerförmigen Elementen 24 abgewandten Seite ist die Leiste 34 angeordnet, welche sich parallel zu der Wandung 33 erstreckt und lösbar mit dieser durch eine Schraubverbindung 36 verbunden ist. Die Leiste 34 weist einen rechteckförmigen Querschnitt auf und schließt im Wesentlichen auf einer Ebene mit den sich unter einem Winkel zur Wandung 33 erstreckenden fingerförmigen Elementen 24 ab. Im Unterschied hierzu ist gemäß Fig. 5b eine Leiste 35 vorgesehen, welche eine an die Kontur des Rahmenelementes 32 angepasste Kontur aufweist, so dass die Leiste 35 zumindest abschnittsweise im Wesentlichen formschlüssig an dem Rahmenteil 32 anliegt. Hierbei überdeckt die Leiste 25 teilweise die Wandung 33 und kann abschnittsweise auch die fingerförmigen Elemente 24 überdecken.

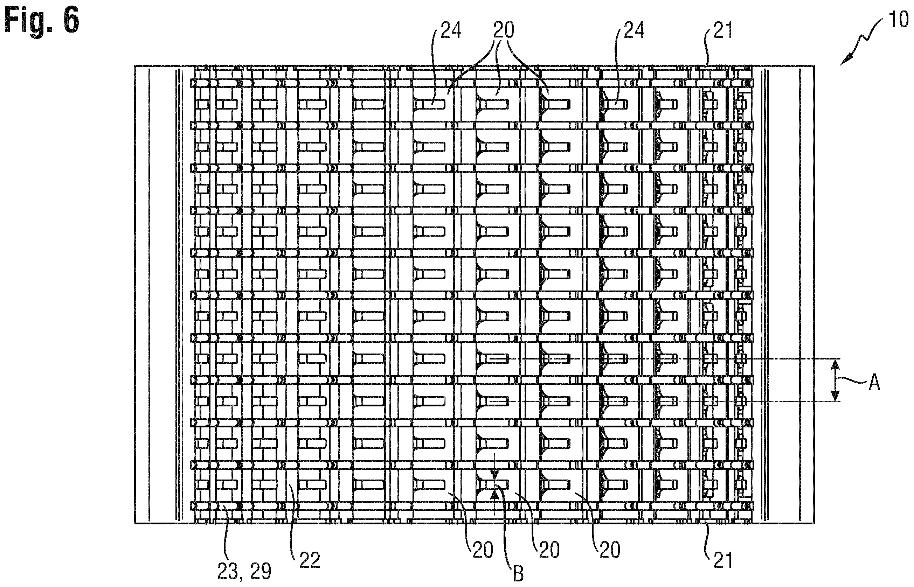

Die Darstellung gemäß Fig. 6 zeigt eine Ansicht auf die Abscheidefläche des Abscheidekorbes 10 von oben. Die fingerförmigen Elemente 24 weisen jeweils eine mittlere Breite B auf, die sich als Mittelwert der an in Längsrichtung des fingerförmigen Elementes 24 gesehen verschiedenen Stellen gemessenen Breite ergibt. Hierdurch wird dem Umstand Rechnung getragen, dass die fingerförmigen Elemente 24 unterschiedliche Querschnitte aufweisen können. Mit dem Bezugszeichen A ist der mittlere Abstand zueinander benachbarter fingerförmiger Elemente 24 bezeichnet, der sich aus dem Abstand von Längsachse L oder Symmetrieachse der jeweiligen benachbarten fingerförmiger Elemente 24 ergibt. Das Verhältnis der mittleren Breite B eines fingerförmigen Elementes 24 zu dem mittleren Achsabstand A eines benachbarten fingerförmigen Elementes 24 beträgt mindestens 1:3,5. Durch die erfindungsgemäße Wahl des Verhältnisses von mittlerer Breite B zu dem mittleren Achsabstand A eines fingerförmigen Elementes 24 wird in axialer Richtung des Abscheidekorbes 10 gegenüber konventionellen fingerförmigen Elementen 24 eine größere Öffnungsweise der Abscheidefläche erreicht, die mit den Vorteilen des Einsatzes von fingerförmigen Elementen 24 zur Verbesserung des Abscheideverhaltens einhergeht.

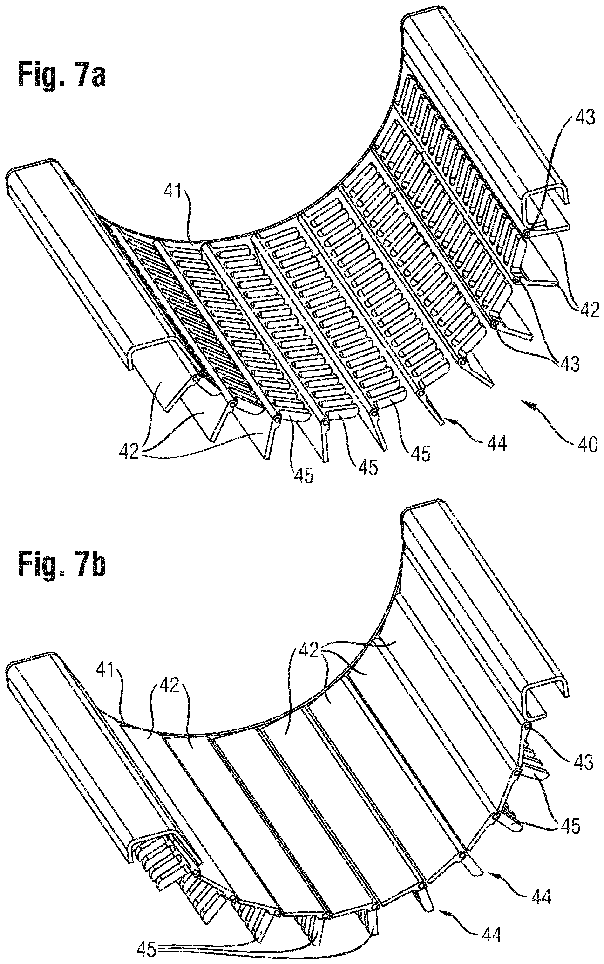

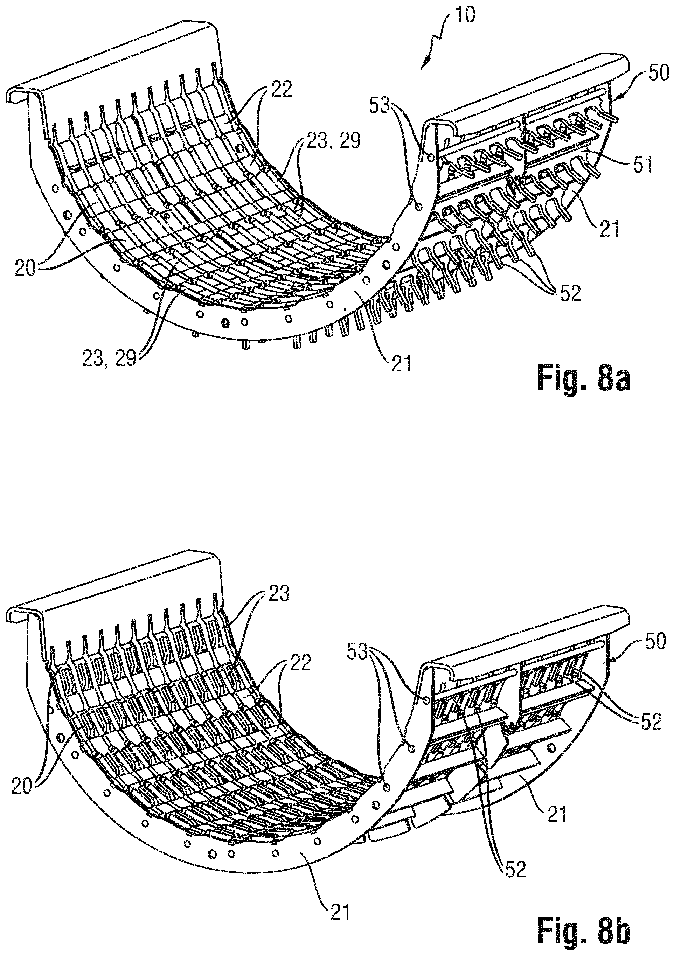

Die Darstellung in den Fig. 7a und 7b zeigt eine alternative Ausführungsform eines Abscheidekorbes 40. Der Abscheidekorb 40 umfasst mehrere bogenförmige Rahmenbauteile 41, die parallel und zueinander beabstandet angeordnet sind und sich in Umfangsrichtung erstrecken. Quer zu den Rahmenbauteilen 41 sind Schwenkachsen 43 zueinander beabstandet angeordnet, an denen Rahmenelemente 44 schwenkbar angeordnet sind. Die Rahmenelemente 44 umfassen eine Vielzahl fingerförmiger Elemente 45 sowie eine Wandung 42, die sich unter einem Winkel zu den fingerförmigen Elementen 45 erstreckend angeordnet ist. Die jeweiligen Rahmenelemente 44 sind durch eine nicht dargestellte Aktorik betätigbar, um sie aus der in Fig. 7a dargestellten Position, in der zwischen den Schwenkachsen 43 und den fingerförmigen Elementen 45 Durchtrittsöffnungen ausgebildet werden, in eine in Fig. 7b dargestellte Position zu verschwenken, in der die Abscheidefläche verschlossen ist. Die für das Verschwenken verwendete Aktorik kann so ausgebildet sein, dass die Rahmenelemente 44 gemeinsam, gruppenweise oder aber individuell verschwenkbar sind. Die Aktorik kann elektrisch, pneumatisch, hydraulisch oder mechanisch beaufschlagbar sein. Der in den Fig. 7a und 7b dargestellte Abscheidekorb 40 kommt an nach dem Axialflussprinzip arbeitenden Erntegutabscheidevorrichtungen zum Einsatz.
Die Darstellungen in den Fig. 8a, 8b zeigen eine alternative Ausführungsform des Abscheidekorbes 10, wie er in Fig. 2a und 2b dargestellt ist. Der Abscheidekorb 10 umfasst mehrere bogenförmige Rahmenbauteile 21 die parallel und in axialer Richtung zueinander beabstandet angeordnet sind. Quer zu den Rahmenbauteilen 21 sind Stege 22 zueinander beabstandet angeordnet. Zwischen den Rahmenteilen 21 erstrecken sich in radialer Richtung Streben 23, die gemeinsam mit den Stegen 22 eine gitterförmige Struktur ausbilden. Die gitterförmige Struktur weist eine Vielzahl von Durchtrittsöffnungen 20 auf, die mit den Stegen 22 und den Streben 23 eine Abscheidefläche des Abscheidekorbes 10 bilden, durch die von der Abscheideeinrichtung 6 separiertes Erntegut hindurchtreten kann. Die Streben 23 sind als Drähte 29 ausgeführt. Zwischen den Rahmenbauteile 21 sind um jeweils eine Schwenkachse 53 drehbar Rahmenelemente 50 angeordnet Die Rahmenelemente 50 weisen einen Befestigungsabschnitt 51 auf, an dem fingerförmige Elemente 52 angeordnet sind. Durch den Befestigungsabschnitt 51 erstreckt sich die Schwenkachse 53, um welche die Rahmenelemente 50 aus einer ersten Position, in der die Durchtrittsöffnungen 20 vollständig freigegeben sind, wie in Fig. 8a dargestellt, in eine zweite Position überführbar sind, in der die fingerförmigen Elemente 52 im Wesentlichen parallel zu den sich in radialer Richtung des Abscheidekorbes 10 erstreckenden Abschnitten der Streben 23 ausgerichtet sind, die eine jeweilige Durchtrittsöffnung 20 begrenzen.

Die beschriebenen Ausführungsformen von Abscheidekörben sind sowohl für nach dem Axialflussprinzip als auch nach dem Tangentialflussprinzip arbeitenden Erntegutabscheidevorrichtungen einsetzbar.

**Bezugszeichenliste**

| | | | |
|---|---|---|---|
| **1** | Einzugs- und Fördereinrichtung | **29** | Draht |
| **2** | Drescheinrichtung | **30** | Rahmenelement |
| **3** | Dreschtrommel | **31** | Wandung |
| **4** | Dreschkorb | **32** | Rahmenelement |
| **5** | Leittrommel | **33** | Wandung |
| **6** | Abscheideeinrichtung | **34** | Leiste |
| **7** | Gehäuse | **35** | Leiste |
| **8** | Förderorgan | **36** | Schraubverbindung |
| **9** | Rippen | | |
| **9a** | Wendel | **40** | Abscheidekorb |
| **10** | Abscheidekorb | **41** | Rahmenbauteil |
| **11** | Förderboden | **42** | Wandung |
| **12** | Rücklaufboden | **43** | Schwenkachse |
| **13** | Rutsche | **44** | Rahmenelement |
| **14** | Gebläse | **45** | fingerförmiges Element |
| **15** | Siebböden | | |
| **16** | erster Leitboden | **50** | Rahmenelement |
| **17** | Förderschnecke | **51** | Befestigungsabschnitt |
| **18** | zweiter Leitboden | **52** | fingerförmiges Element |
| **19** | Förderschnecke | **53** | Schwenkachse |
| **20** | Durchtrittsöffnungen | | |
| **21** | Rahmenbauteile | **A** | mittlerer Achsabstand |
| **22** | Stege | **B** | mittlere Breite |
| **23** | Streben | **L** | Längsachse |
| **24** | fingerförmige Elemente | | |
| **25** | erster Schenkel | | |
| **26** | zweiter Schenkel | | |
| **27** | Rahmenelement | | |
| **28** | Durchbohrungen | | |

## Patentansprüche

1. Abscheidekorb (10, 40) einer Erntegutabscheidungsvorrichtung (2, 6) eines Mähdreschers, umfassend zueinander beabstandete, bogenförmige Rahmenbauteile (21), zwischen denen sich quer zu den Rahmenbauteilen (21, 41) erstreckende Stege (22) oder Schwenkachsen (43) ortsfest angeordnet sind, die eine Abscheidefläche mit Durchtrittsöffnungen (20) ausbilden, **dadurch gekennzeichnet,**
**dass** in die Durchtrittsöffnungen (20) zwischen den Stegen (22) oder Schwenkachsen (43) sich einheitlich in Umfangsrichtung erstreckende fingerförmige Elemente (24, 45, 52) einbringbar sind, die lösbar am Abscheidekorb (10, 40) anbringbar und die in axialer Richtung des Abscheidekorbes (10, 40) mit einem mittleren Achsabstand (A) zueinander beabstandet angeordnet sind, und dass jedes Element (24, 45, 52) über seine Längsausdehnung gesehen eine mittlere Breite (B) aufweist, wobei das Verhältnis der mittleren Breite (B) eines Elementes (24, 45, 52) zu dem mittleren Achsabstand (A) einander benachbarter Elemente (24, 45) mindestens 1:3,5 beträgt, dass mehrere fingerförmige Elemente (24, 45, 52) an einem Rahmenelement (27, 32, 44) angeordnet sind, wobei das Rahmenelement (27) einen ersten Schenkel (25) sowie einen gegenüber diesem um einen Winkel geneigten zweiten Schenkel (25) aufweist, wobei an den Rahmenelementen (27, 32) auf der dem jeweiligen Element (24) abgewandten Seite jeweils zumindest eine Leiste (34, 35) angeordnet ist, die den ersten Schenkel (25) des Elementes (24) in radialer Richtung überragt, so dass die Leiste (34, 35) in den in der Erntegutabscheidevorrichtung (2, 6) umlaufenden Gutstrom hinein ragt.

2. Abscheidekorb (10, 40) nach Anspruch 1, **dadurch gekennzeichnet, dass** an der zumindest einen Leiste (34, 35) auf der den fingerförmigen Elementen (24) abgewandten Seite ein zusätzliches Verschleißblech angeordnet ist.

3. Abscheidekorb (10, 40) nach einem der Ansprüche 1 oder 2, **dadurch gekennzeichnet, dass** der mit dem Erntegut in Berührung kommende Bereich der zumindest einen Leiste (34, 35) mit verschiedenen Profilierungen ausführbar ist.

4. Abscheidekorb (10, 40) nach einem der Ansprüche 1 bis 3, **dadurch gekennzeichnet, dass** das jeweilige Rahmenelement (44, 50) um die Schwenkachse (43, 53) drehbar gelagert ist.

5. Abscheidekorb (10, 40) nach Anspruch 4, **dadurch gekennzeichnet, dass** die Schwenkachse (43, 53) in einem Bereich der Rahmenelemente (44, 50) angeordnet ist, in dem eine Wandung (42) des Rahmenelementes (44, 50) und die fingerförmigen Elemente (44, 52) aufeinander stoßen.

6. Abscheidekorb (10, 40) nach einem der Ansprüche 1 bis 5, **dadurch gekennzeichnet, dass** sich parallel zu den Rahmenelementen (22) erstreckende Streben (23) vorgesehen sind, die als Drähte (29) ausgeführt sind, die gemeinsam eine gitterartige Struktur mit Durchtrittsöffnungen (20) ausbilden, zwischen denen die fingerförmigen Elemente (24) einbringbar sind.

7. Abscheidekorb (10, 40) nach Anspruch 6, **dadurch gekennzeichnet, dass** die mit fingerförmigen Elementen (52) versehenen Rahmenelemente (50) um die Schwenkachse (53) aus einer ersten Position, in der die Durchtrittsöffnungen (20) nahezu vollständig geöffnet sind, in eine zweite Position überführbar sind, in der die fingerförmigen Elemente (52) im Wesentlichen parallel zu den sich in radialer Richtung des Abscheidekorbes (10) erstreckenden Abschnitten der Streben (23,29) ausgerichtet sind, die die jeweilige Durchtrittsöffnung (20) begrenzen.

8. Abscheidekorb (10, 40) nach einem der Ansprüche 1 bis 7, **dadurch gekennzeichnet, dass** der Abscheidekorb (10, 40) an einer nach dem Axialflussprinzip arbeitenden Erntegutabscheidungsvorrichtung einsetzbar ist.

9. Abscheidekorb (10, 40) nach einem der Ansprüche 1 bis 7, **dadurch gekennzeichnet, dass** der Abscheidekorb (10, 40) an einer nach dem Tangentialflussprinzip arbeitenden Erntegutabscheidungsvorrichtung einsetzbar ist.

## Claims

1. A separating concave (10, 40) of a crop material separating apparatus (2, 6) of a combine harvester, comprising mutually spaced arcuate frame components (21), between which there are stationarily arranged pivot axes (43) or bars (22) which extend transversely relative to the frame components (21, 41) and which form a separating surface having through openings (20), **characterised in that**
finger-shaped elements (24, 45, 52) can be introduced into the through openings (20) between the bars (22) or pivot axes (43), which elements (24, 45, 52) which extend uniformly in the peripheral direction and which can be mounted releasably to the separating concave (10, 40) and which are arranged in mutually spaced relationship at an average axis spacing (A) in the axial direction of the separating concave (10, 40), and that each element (24, 45, 52) viewed over its longitudinal extent is of an average width (B), wherein the ratio of the average width (B) of an element (24, 45, 52) to the average axis spacing (A) of mutually adjacent elements (24, 45) is at least 1:3.5, that a plurality of finger-shaped elements (24, 45, 52) are arranged on a frame element (27, 32, 44), wherein the frame element (27) has a first limb (25) and a second limb (25) inclined through an angle relative thereto, wherein arranged on the frame elements (27, 32) on the side remote from the respective element (24) is at least one respective strip member (34, 35) which projects in the radial direction beyond the first limb (25) of the element (24) so that the strip member (34, 35) projects into the crop material flow which circulates in the crop material separating apparatus (2, 6).

2. A separating concave (10, 40) according to claim 1 **characterised in that** an additional wear plate is arranged on the at least one strip member (34, 35) on the side remote from the finger-shaped elements (24).

3. A separating concave (10, 40) according to one of claims 1 and 2 **characterised in that** the region of the at least one strip member (34, 35), that comes into contact with the crop material, can be implemented with various profilings.

4. A separating concave (10, 40) according to one of claims 1 to 3 **characterised in that** the respective frame element (44, 50) is mounted rotatably about the pivot axis (43, 53).

5. A separating concave (10, 40) according to claim 4 **characterised in that** the pivot axis (43, 53) is arranged in a region of the frame elements (44, 50), in which a wall (42) of the frame element (44, 50) and the finger-shaped elements (44, 52) bear against each other.

6. A separating concave (10, 40) according to one of claims 1 to 5 **characterised in that** there are provided struts (23) which extend parallel to the frame elements (22) and which are in the form of wires (29) which jointly form a grid-like structure with through openings (20), between which the finger-shaped elements (24) can be introduced.

7. A separating concave (10, 40) according to claim 6 **characterised in that** the frame elements (50) provided with the finger-shaped elements (52) can be moved about the pivot axis (53) from a first position in which the through openings (20) are almost completely opened into a second position in which the finger-shaped elements (52) are oriented substantially parallel to the portions of the struts (23, 29), that extend in the radial direction of the separating concave (10), defining the respective through opening (20).

8. A separating concave (10, 40) according to one of claims 1 to 7 **characterised in that** the separating concave (10, 40) can be used on a crop material separating apparatus which operates on the axial flow principle.

9. A separating concave (10, 40) according to one of claims 1 to 7 **characterised in that** the separating concave (10, 40) can be used on a crop material separating apparatus which operates on the tangential flow principle.

## Revendications

1. Corbeille de séparation (10, 40) d'un dispositif de séparation de produit récolté (2, 6) d'une moissonneuse-batteuse, comprenant des composants de cadre arqués, distants les uns des autres (21, 41), entre lesquels sont montés fixes des barrettes (22) ou des axes de pivotement (43) qui s'étendent transversalement aux composants de cadre (21, 41) et qui forment une surface de séparation avec des ouvertures de passage (20), **caractérisée en ce que** dans les ouvertures de passage (20) entre les barrettes (22) ou les axes de pivotement (43) sont insérables des éléments en forme de doigts (24, 45, 52) qui s'étendent unitairement dans la direction circonférentielle, qui peuvent être montés sur la corbeille de séparation (10, 40) de façon amovible et qui sont disposés à distance les uns des autres dans la direction axiale de la corbeille de séparation (10, 40) avec un entraxe moyen (A), et **en ce que** chaque élément (24, 45, 52) vu dans son extension longitudinale présente une largeur moyenne (B), le rapport de la largeur moyenne (B) d'un élément (24, 45, 52) à l'entraxe moyen (A) d'éléments voisins l'un de l'autre (24, 45) étant d'au moins 1:3,5, **en ce que** plusieurs éléments en forme de doigts (24, 45, 52) sont disposés sur un élément de cadre (27, 32, 44), l'élément de cadre (27) comportant une première branche (25) ainsi qu'une seconde branche (25) inclinée selon un angle par rapport à celle-ci, sur les éléments de cadre (27, 32) sur le côté orienté à l'opposé de l'élément (24) correspondant étant disposée au moins une languette (34, 35) qui dépasse de la première branche (25) de l'élément (24) dans la direction radiale, de sorte que la languette (34, 35) pénètre dans le flux de produit circulant dans le dispositif de séparation de produit récolté (2, 6).

2. Corbeille de séparation (10, 40) selon la revendication 1, **caractérisée en ce que**, sur la au moins une languette (34, 35), une tôle d'usure supplémentaire est disposée sur le côté opposé aux éléments en forme de doigts (24).

3. Corbeille de séparation (10, 40) selon une des revendications 1 ou 2, **caractérisée en ce que** la zone de la au moins une languette (34, 35) qui vient en contact avec le produit récolté peut être réalisée avec des profilages différents.

4. Corbeille de séparation (10, 40) selon une des revendications 1 à 3, **caractérisée en ce que** chaque élément de cadre (44, 50) est monté rotatif autour de l'axe de pivotement (43, 53).

5. Corbeille de séparation (10, 40) selon la revendication 4, **caractérisée en ce que** l'axe de pivotement (43, 53) est disposé dans une zone des éléments de cadre (44, 50) dans laquelle une paroi (42) de l'élément de cadre (44, 50) et les éléments en forme de doigts (44, 52) butent l'un contre l'autre.

6. Corbeille de séparation (10, 40) selon une des revendications 1 à 5, **caractérisée en ce qu'**il est prévu des entretoises (23) qui s'étendent parallèlement aux éléments de cadre (22) et qui sont conformées en fils métalliques (29) qui forment ensemble une structure en forme de treillage avec des ouvertures de passage (20) entre lesquelles peuvent être insérés les éléments en forme de doigts (24).

7. Corbeille de séparation (10, 40) selon la revendication 6, **caractérisée en ce que** les éléments de cadre (50) munis d'éléments en forme de doigts (52) sont transférables autour de l'axe de pivotement (53) d'une première position, dans laquelle les ouvertures de passage (20) sont presque entièrement ouvertes, à une seconde position, dans laquelle les éléments en forme de doigts (52) sont orientés sensiblement parallèlement aux portions des entretoises (23, 29) qui s'étendent dans la direction radiale de la corbeille de séparation (10) et qui délimitent chaque ouverture de passage (20).

8. Corbeille de séparation (10, 40) selon une des revendications 1 à 7, **caractérisée en ce que** la corbeille de séparation (10, 40) peut être montée sur un dispositif de séparation de produit récolté fonctionnant selon le principe du flux axial.

9. Corbeille de séparation (10, 40) selon une des revendications 1 à 7, **caractérisée en ce que** la corbeille de séparation (10, 40) peut être montée sur un dispositif de séparation de produit récolté fonctionnant selon le principe du flux tangentiel.
